# EUROPEAN PATENT APPLICATION

(11) **EP 4 600 816 A1**
(43) Date of publication of application: **13.08.2025**
(21) Application number: 25156062.9
(22) Date of filing: 05.02.2025
(51) Int. Cl.: G06F 9/46, G06N 20/00

(54) **A METHOD, AN APPARATUS AND A COMPUTER PROGRAM PRODUCT FOR PROVIDING A WORKFLOW AUTHORING TOOL FOR MACHINE LEARNING OPERATIONS**

(30) Priority: 12.02.2024 FI 20245139
(71) Applicant: Nokia Solutions and Networks Oy, 02610 Espoo (FI)
(72) Inventor: RAMANAN, Buvaneswari, Scotch Plains (US); DRABECK, Lawrence, Oceanport (US); FRIEDMAN, Brian, Basking Ridge (US); WOO, Thomas, Short Hills (US); WILLIAMS, Thomas, Columbus (US); KHAN, Manzoor, New Providence (US); AGAEV, Roman, Neot Golan (IL); AGUR, Eadan, Givatayim (IL)
(74) Representative: Nokia EPO representatives

(57) **Abstract**

The embodiments relate to a method comprising receiving as input a first file describing one or more workflows for a machine learning operation, a set of second files describing particular tasks for said one or more workflows as defined in the first file, and a Configuration File containing domain specific implementation information associated with descriptions in the first and set of second files; generating one or more workflow files according to the received input; and converting at least one of the tasks of the one or more generated workflows into equivalent deployable task files describing an implementation of a machine learning task. The embodiments also relate to technical equipment for implementing the method.

## Description

### Technical Field

The present solution generally relates to workflow authoring tool for machine learning operations.

### Background

Machine Learning (ML) model development is predominantly data-driven, which has implications in operationalizing the models, such as a requirement for version controlling the data. In addition to the common DevOps challenges of scalability and technical performance (latency and throughput), ML-specific challenges may arise especially during the operations phase.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for receiving as input a first file describing one or more workflows for a machine learning operation, a set of second files describing particular tasks for said one or more workflows as defined in the first file, and a Configuration File containing domain specific implementation information associated with descriptions in the first and set of second files; means for generating one or more workflow files according to the received input; and means for converting at least one of the tasks of the one or more generated workflows into equivalent deployable task files describing an implementation of a machine learning task.

According to a second aspect, there is provided a method, comprising: receiving as input a first file describing one or more workflows for a machine learning operation, a set of second files describing particular tasks for said one or more workflows as defined in the first file, and a Configuration File containing domain specific implementation information associated with descriptions in the first and set of second files; generating one or more workflow files according to the received input; and converting at least one of the tasks of the one or more generated workflows into equivalent deployable task files describing an implementation of a machine learning task.

According to a third aspect, there is provided an apparatus comprising at least one processor, memory including computer program code, the memory and the computer program code configured to, with the at least one processor, cause the apparatus to perform at least the following: receive as input a first file describing one or more workflows for a machine learning operation, a set of second files describing particular tasks for said one or more workflows as defined in the first file, and a Configuration File containing domain specific implementation information associated with descriptions in the first and set of second files; generate one or more workflow files according to the received input; and convert at least one of the tasks of the one or more generated workflows into equivalent deployable task files describing an implementation of a machine learning task.

According to a fourth aspect, there is provided computer program product comprising computer program code configured to, when executed on at least one processor, cause an apparatus or a system to: receive as input a first file describing one or more workflows for a machine learning operation, a set of second files describing particular tasks for said one or more workflows as defined in the first file, and a Configuration File containing domain specific implementation information associated with descriptions in the first and set of second files; generate one or more workflow files according to the received input; and convert at least one of the tasks of the one or more generated workflows into equivalent deployable task files describing an implementation of a machine learning task.

According to an embodiment, the first file defines said one or more workflows by one or more tasks and the relationship between said tasks.

According to an embodiment, the Configuration File contains variable definitions used by the first and the set of second files.

According to an embodiment, the set of second files are represented in a compressed format.

According to an embodiment, a deployable task file is generated from the compressed format.

According to an embodiment, the set of second files is included in the first file.

According to an embodiment, the first file is a Master Manifest File and the second file is a Task-specific Manifest File.

According to an embodiment, the computer program product is embodied on a non-transitory computer readable medium.

### Description of the Drawings

In the following, various embodiments will be described in more detail with reference to the appended drawings, in which
Fig. 1 shows a high-level view of the workflow authoring and realization process depicting the workflow authoring and realization tool and associated devices;
Fig. 2 shows an example of a workflow authoring tool according to an embodiment;
Figs. 3a - 3d show examples of workflows executed in the training or inferencing cluster;
Fig. 4 shows an apparatus according to an embodiment;
Fig. 5 shows an example snippet of a Master Manifest File;
Fig. 6 shows an example snippet of a Configuration File;
Fig. 7 shows another example snippet of the Configuration File;
Fig. 8 shows an example of a compressed Task-specific Manifest File and sample expansions of this file into deployable YAML files;
Fig. 9 shows an example of a sample of a workflow code;
Fig. 10 shows an example of operations performed by the tool; and
Fig. 11 is a flowchart illustrating a method according to an embodiment.

### Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

MLOps (Machine Learning Operations) is a way to train, test, deploy, manage, and monitor machine learning (ML) models in a real-world production environment. MLOps comprises stages as design, model development and operations. In the design phase, requirements and ML use cases are defined. In the development phase, the ML model is created and tested. In the operations phase, the model is deployed with continuous integration and continuous deployment (CI/CD) pipelines. The last phase includes monitoring and triggering during the deployment.

Machine Learning (ML) model development is predominantly data-driven, which has implications in operationalizing the models, such as a requirement for version controlling the data. In addition to the common DevOps challenges of scalability and technical performance (latency and throughput), ML-specific challenges may arise especially during the operations phase:
- Model Monitoring: Once the model is deployed, the stakeholders are expected to monitor the model's prediction quality and understand whether the model is still valid on the inferencing data or needs to be updated. It must also be determined whether the model is robust against anomalous and adversarial input.
- Model Reproducibility: Reproducibility is critical to iterative model development, and the time required to reproduce a given model version can be reduced using CI/CD. The reproducibility is important in the production phase in the context of fault tolerance and is one of the key requirements that regulatory agencies put forth for ML applications as well. Implementing reproducibility is challenging due to the hidden sources of randomness that can also be the sources of performance improvement.
- Model Lifecycle Management: The lifecycle of an ML model involves exploratory data analysis (EDA), data and feature engineering, model development, iterative model training, model deployment, model inferencing and model performance monitoring. As a result of the distributional changes in the inferencing data or because of changes in the business requirements, these processes need to be repeated.

The overall MLOps (Machine Learning Operations) solution needs to support individual services with an intuitive interface that is representative of the functionality underneath (the what) and not the exact implementation (the how). In addition, a MLOps solution needs to support the automated orchestration of these services for model lifecycle management.

A plethora of tools are available for accomplishing ML functionalities. For example, for ML inferencing, open-source tools exist, including: Seldon, KServe, BentoML, Ray.serve (on Kuberay), run.ai inferencing, sagemaker-controller inferencing as well as any company internal, home-grown tools. For example, for ML training, several tools exist, such as Kubeflow Training (TFJob / TorchJob / MXJob / MPIJob), Ray-train (on Kuberay), run.ai training, polyaxon training, sagemaker-controller training, as well as any company internal, home-grown tools, etc. As yet another example, for Workflow Orchestrator there are tools such as Airflow, Flyte, Prefect, Argo, Luigi etc. Each customer will have their own choice of toolset. Since the number and variation of the tools is enormous, it is clear that any MLOps solution needs to quickly adapt to the emerging tools.

In a majority of operations scenarios, the models are trained in a cluster (referred here to as "training cluster") that operates in the cloud and the trained models are deployed into clusters (referred here to as "edge cluster") that operate at the edge (i.e., a node acting as a portal for end user communication). The decision to deploy a model at the edge cluster may involve additional levels of sanity checking or verification, and may involve a different schedule or trigger mechanism, and so on, which is independent of the schedules in the training cluster. In other scenarios, model evaluation and retraining needs to be performed at the edge cluster itself as per the data privacy policies followed by the customer. Both of these scenarios should be covered by an MLOps solution

The present embodiments are aimed to provide a unified approach for the integration of ML functions, which also takes into account the needs presented above. One of the requirements for such an approach is that it should significantly reduce the time needed for ML-based use case development and deployment, thereby reducing the time to market. The following features have been identified to accomplish this:
Cloud Agnostic Operation:
   Deployment can be on-premise or on any cloud
   Does not use proprietary cloud features
   Deployable on any Kubernetes cluster
Pluggable Components:
   Training (Kubeflow Training (TFJob, TorchJob, MXJob, MPIJob), Ray-train (on Kuberay), run.ai training, Polyaxon training, sagemaker-controller training, and any company internal, home-grown solutions, etc.)
   Inferencing (Seldon, KServe, Ray-serve (on Kuberay), run.ai inferencing, sagemaker-controller inferencing, and any company, internal home-grown solutions, etc.)
   Model Registry/Experiment Tracking (MLflow, Weights & Biases, etc.)
   Model Optimization (onnxruntime, openvino, etc.)
Explicit Workflow Orchestration with Decentralization support:
   Automation is expressed using workflows
   Diverse trigger types, notification mechanisms, task processing implementations
   Distributed deployment, targeting central/edge configurations, workflow can span multiple clusters

The approach that is being provided by the present embodiments is a Workflow Authoring and Realization Tool that is designed to accomplish the needs as presented above. Before discussing the Workflow Authoring and Realization Tool in a more detailed manner, the present solution is compared to the other solutions found in a market in the following table.

The comparison is made between features, such as whether the solution is open source based, is cloud native, has cloud agnostic operations, has pluggable components, and/or provides distributed workflow management.

| Solution (rows) MLOps Feature-> | Open source | Cloud Native | Cloud agnostic operations | Pluggable component s | Distributed Workflow Management |
|---|---|---|---|---|---|
| Kuberflow pipelines | Yes | Yes | Yes | No | No |
| Vertex Al, AWS Sagemaker, Azure ML | No | Yes* | No | No | No |
| DVC Pipelines /MLflow Pipelines | Yes | N/A | N/A | N/A | N/A |
| Valobai / Dagshub | No | Yes** | No | No | No |
| The present solution | Own* | Yes | Yes | Yes | Yes |

| | | | | | |
|---|---|---|---|---|---|
| *) company internal; **) but not in any cloud | | | | | |

The table above compares the major MLOps tools (open source and commercial) that are available against the main features that promote faster development. As is shown in the table, the drawback of Kubeflow Pipelines is that it supports only the tools in its ecosystem and does not allow for pluggability. For example, if one were to utilize home-grown solutions for training and for inferencing, there is no way to adapt the framework for these components and launch the jobs / microservices on these components from within Kubeflow Pipelines. Also, it can only perform ML workflow orchestration within the same cluster where it is operating and cannot launch tasks or workflows across clusters.

Though the ML services of the hyperscalers like AWS (Amazon Web Services), Google and Azure support a variety of MLOps features, the components underneath are not pluggable and these services cannot be deployed across different clusters (e.g., an on-premise cluster). Valohai and Daghub have similar limitations.

DVC (Data Version Control) and MLflow pipelines are simple implementations that are designed to launch jobs / processes within a single compute environment. They are not fully-fledged orchestrators and lack cloud-native support.

In general, ML development is very different from traditional code development, as it is data driven and involves a lot of randomness in the model building process. This poses the additional challenges of version control of the model, the data and the metadata, the tracking of the experiments and the lineage for reproducibility of the results. Other challenges include the monitoring of the model performance once deployed, the retraining of the models once the model is found to be inaccurate or obsolete, and the overall model lifecycle management. The tool, according to present embodiments, is configured to overcome these challenges.

In addition, the Workflow Authoring and Realization Tool, according to present embodiments, is able to reduce the time required for development through deployment. This is because the tool supports the automated orchestration of the MLOps functionalities with an intuitive interface that is representative of the functionality underneath (the what) and not the exact implementation (the specific component that implements the functionality). Therefore, the tool, according to present embodiments, also adapts to the emerging tools of choice quickly, with minimum effort from human users.

Aside from this, in some of the deployment scenarios, the e2e ML functionalities need to be hosted on-premise in a single cluster, whereas in other scenarios, the training needs to be performed in the cloud, while the inferencing needs to be performed at the edge. The Workflow Authoring and Realization Tool, according to present embodiments, is capable of catering to both of these scenarios (and potentially many more) and is able to orchestrate across multiple clusters when applicable. It can be inferred from the table above that none of the existing tools is able to meet these crucial requirements.

Modern MLOps platforms may use an orchestration layer containing multiple workflows that automate the operations that are associated with machine learning (ML), such as: data curation, data processing, data validation, training, model acceptance testing, model deployment, inferencing, model monitoring, ground truth labeling, etc. Each workflow may be represented by a directed acyclic graph (DAG) composed of individual tasks. Many of these tasks are executed under Kubernetes and require a YAML-based (Yet Another Markup Language) manifest to instantiate them. The Workflow Authoring and Realization Tool, according to the present embodiment, is capable of generating a workflow according to specifications of any Workflow orchestration tool. It is to be noted that, in this disclosure, the terms "workflow" and "pipeline" are used interchangeably.

As already mentioned, the present embodiments provide a solution to create a Workflow Authoring and Realization Tool, which may greatly simplify and automate the generation of the workflow DAGs as well as all the required, deployable manifest files. To facilitate the easy authoring and operation of the workflows (the steps involved in the ML operations), a custom, YAML-based language is supported which also abstracts out the technology specifics. Not only does the tool according to embodiments reduce the total number of lines of code (LOC) by ~ 50%, but it may also greatly reduce definition redundancy and the chance of human error.

Another advantage of the tool according to embodiments is that it abstracts out the underlying system components so that users do not need specific knowledge of the syntax of the associated manifest files. It also allows for easy switching between different system components at deployment time. This abstraction also enables developers to utilize a single interface for ML workflow design and allows for deployment across a wide range of different components and deployment architectures (on-premise, on the edge, in the cloud, or any combination of these).

The system API's and data versioning features of the present solution also take advantage of the same abstraction idea, where the tool is agnostic to the underlying system components. Data scientists and ML engineers alike will be able to quickly author the workflows for their use cases and get them operational.

The Workflow Authoring and Realization Tool, according to present embodiments, provides several improvements when compared to prior solutions.

As a first improvement, the Workflow Authoring and Realization Tool enables the use of at least two types of input files, wherein at least one of the input files (i.e., Master Manifest File) defines the workflow, and wherein at least one other of the input files (i.e., Configuration File) defines the environment-specific values needed for the workflow and tasks. In addition to these two files, the tool may utilize Task-specific Manifest File(s), into which tasks for the workflow are defined. It is to be appreciated that the content of the Task-specific Manifest File(s) can be included in the Master Manifest File instead of separate Task-specific Manifest File(s). Use Case Developers create an initial set of these files and test them in their local environment. Copies of these files are provided to Use Case Deployers in a given location, who make the appropriate modifications to the Configuration File, which modifications relate to local environment information specific to the use case. After that, the tool can be rerun. This simple process reduces the amount of time needed to deploy a given use case in a given computing cluster. Non-limiting examples of the use cases include: detecting and identifying anomalies in an industry; cellular traffic prediction; predictive maintenance of network infrastructure components; fallen person detection in public spaces; detecting and isolating abnormalities from medical images (e.g., X-ray, MRI, CAT scan), etc.

As a second improvement, the Workflow Authoring and Realization Tool provides an improved version of a YAML file format, i.e., a compressed YAML format. This format generalizes the required information so that the Use Case Developers do not need any component-specific knowledge in order to create Task-specific Manifest Files for different component options. When the Task-specific Manifest Files are written in the compressed YAML format, according to present embodiments, the Workflow Authoring and Realization Tool is able to automatically expand these files to generate the deployable manifest files. The compressed YAML format also enable users to quickly switch between different component options for training, inferencing, etc.

As a third improvement, the Workflow Authoring and Realization Tool is able to automatically generate a set of deployable manifest files as well as the code that is needed to realize the associated workflow DAGs in the workflow orchestration system (e.g., Airflow, Flyte, Prefect, Argo, Luigi, etc.). This reduces the amount of tool-specific knowledge and time needed to otherwise create or modify the deployable manifest files and DAG code.

The technical solutions behind these three improvements are discussed next in a more detailed manner.

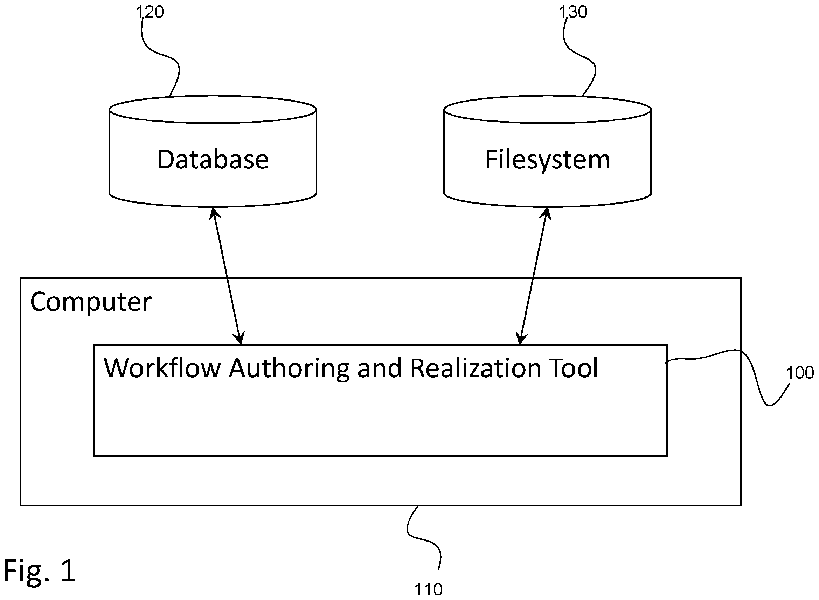

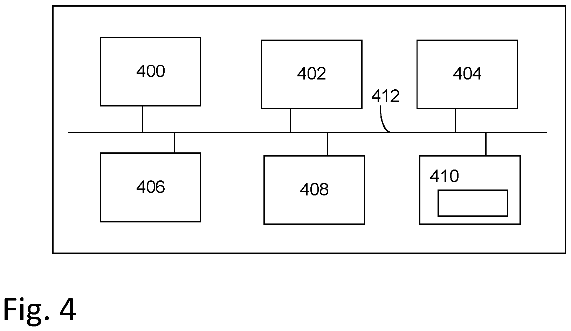

Figure 1 illustrates an embodiment of a workflow authoring tool 100, i.e., the Workflow Authoring and Realization Tool for MLOps, with its relation and connections to other devices. The Workflow Authoring and Realization Tool according to present embodiments is simply referred to as "tool". The tool 100 is executed within a computer 110 (an example of a computer is illustrated in Figure 4). During execution, the tool 100 can be configured to retrieve (and write) associated data from (and to) either a database 120 or a filesystem 130, either of which can reside within computer 110 itself or can be connected to computer 110 via a network interface. The tool 100 retrieves, from the database 120 or from the filesystem 130, the component-specific templates (i.e., a workflow template or a task template) used for generating the final deployable task manifest files, as well as the Master Manifest File, Task-specific Manifest files, and Configuration File, and produces the workflow DAGs and the deployable task manifest files which the tool 100 is configured to store into the database 120 or the filesystem 130.

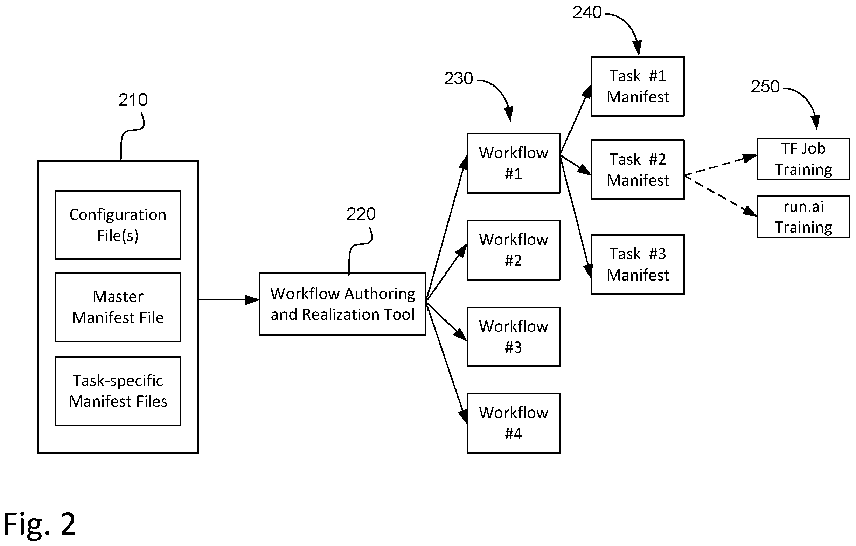

Figure 2 illustrates a simplified example of the tool 100 of Figure 1, according to an embodiment. In Figure 2, the tool is referred to as a reference sign 220. The tool 220 receives as input a set of files 210 comprising a first file and a set of second files and a configuration file. The first file corresponds to a Master Manifest File, and the set of second files comprises Task-specific Manifest Files. The Master Manifest File should be understood as an implementation agnostic manifest file (i.e., incomplete, or generic manifest files that are not directed to a particular implementation solution), which describes the general overall workflow to be authored by tool in an implementation agnostic manner. The Configuration File contains domain specific implementation information associated with generic descriptions in the Master Manifest File (e.g., a specific IP address of one or more network devices as referenced in the Master Manifest File using a generic term). The Task-specific Manifest File describes a particular task (e.g., machine learning training or data processing to be performed using one or more specific platforms) to be configured as described in the agnostic Master Manifest File. The Task specific Manifest Files can be embedded in a Master Manifest File also, whereupon the set of files 210 being received by the tool 220 comprises two files.

The tool 220 takes the set of files 210 as input, and, in an automated fashion, generates one or more workflows 230 (e.g., Directed Acyclic Graph (DAG)) as well as one or more deployable Task Manifest Files 240 (i.e., a complete, implementation specific set of manifest files) that are ready for deployment. The Task Manifest Files 240 may describe implementation of machine learning tasks that are ready to be implemented. Training specifications 250 illustrate potential different machine learning training deployments (e.g., Kubeflow Training (TFJob / TorchJob / MXJob / MPIJob), Ray-train (on Kuberay), run.ai training, polyaxon training, sagemaker-controller training, company internal and home-grown solutions, etc.) that can be used by the tool with simple changes in the Configuration File. It is appreciated that instead of the ones being mentioned in Figure 2, any other training deployment can be used.

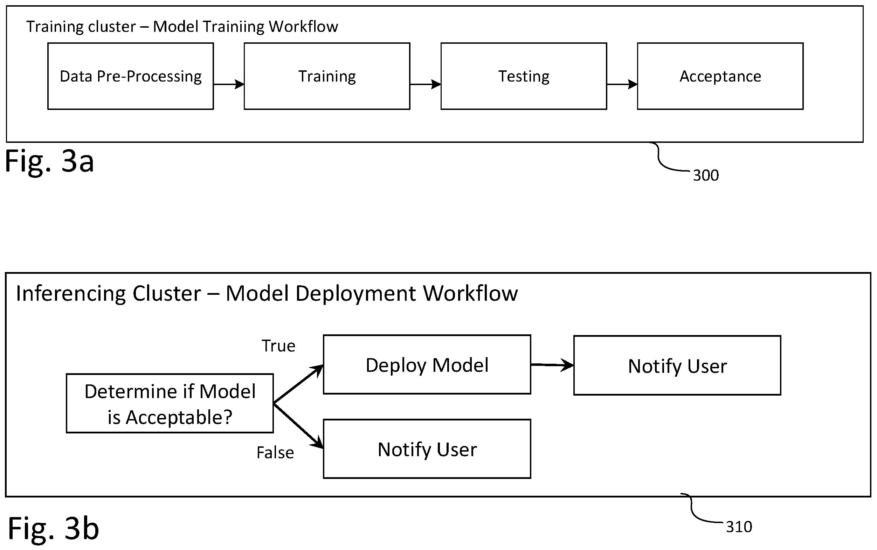

Figures 3a - 3d show examples of workflows with respective tasks executed in the training or inferencing cluster. These workflows and tasks represent examples generated by the tool according to present embodiments.

In Figure 3a a simple model training workflow that is executed in a training cluster 300 is shown as an example. The training cluster 300 can be situated in the cloud or at the edge. The training workflow comprises the tasks of data preprocessing, training, testing and model acceptance. In data preprocessing, the data is converted into a format that is understood by an ML model. In addition, a training dataset is generated. In training, the training dataset is used to train the ML model. After training, the ML model is tested with a new test data (not the same as the training data). In acceptance, the model's performance and accuracy is ascertained. The training workflow of Figure 3a can represent one of the workflows being created by the tool according to an embodiment (i.e., in Figure 1: tool 100; In Figure 2: tool 220).

In Figure 3b a model deployment workflow that is executed in an inferencing cluster 310 is shown as an example. The model deployment workflow is used to stand up trained models. The Inferencing Cluster 310 can be situated in the cloud or at the edge. The model deployment workflow begins by checking if the model is acceptable via some metric or metrics (e.g., model's prediction accuracy; prediction error rate; Area Under the Receiver Operating Characteristic Curve (AUROC)). If the model is acceptable, the "Deploy Model" task deploys the model on the Inferencing Cluster 310. Once the model is deployed, the model server can receive inferencing requests. If a different model version was previously deployed on the Inferencing Cluster 310, the new model will replace the previous model that was being used by the model server. If the model is not acceptable then it is not deployed, and any existing model(s) remain in place. The user who deployed the workflow is then notified if the new model was deployed or rejected. The model deployment of Figure 3b can represent one of the workflows being created by the tool according to an embodiment (i.e., in Figure 1: tool 100; In Figure 2: tool 220).

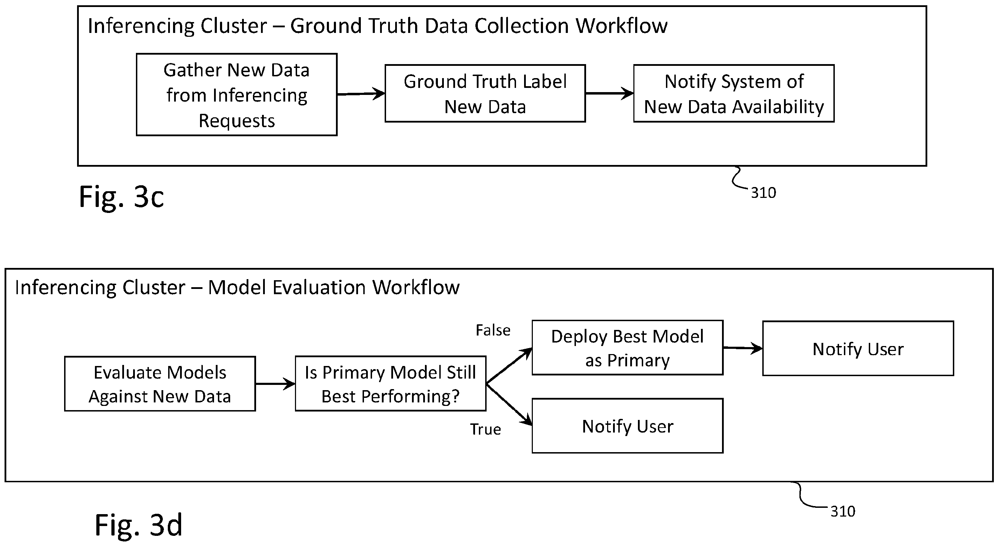

In Figure 3c a ground truth data collection workflow that is executed in an inferencing cluster 310 is shown as an example. The ground truth data collection workflow is used to gather and ground truth label new data. The Inferencing Cluster 310 can be situated in the cloud or at the edge. The "Gather New Data from Inferencing Requests" task gathers data that has been recorded from prior inferencing requests. This data is passed to a "Ground Truth Label New Data" task to be labeled. The workflow sends a notification to the system when the new, ground truth labelled data becomes available. The new, ground truth labelled data can be used, for example, to evaluate the performance of deployed models and to retrain new models. The ground truth data collection of Figure 3c can represent one of the workflows being created by the tool according to an embodiment (i.e., in Figure 1: tool 100; In Figure 2: tool 220).

In Figure 3d a model evaluation workflow that is executed in an inferencing cluster 310 is shown as an example. The model evaluation workflow uses the new labeled data from the Ground Truth Data Collection Workflow to evaluate the model performance. This workflow assumes that there are two models deployed for inferencing, with one as the primary model and the other as a shadow model. The first task uses the new ground truth labeled data to evaluate the performance of the two models. The second task determines if the primary model is still the best performing model, and if not, then the "Deploy New Model as Primary" task promotes the shadow model to the primary and demotes the existing primary model to shadow. The user who deployed the workflow is then notified about the accuracy results as well as the primary and shadow model selection. The model evaluation of Figure 3d can represent one of the workflows being created by the tool according to an embodiment (i.e., in Figure 1: tool 100; In Figure 2: tool 220).

Referring back to Figure 2. The tool 220 is configured to receive data concerning workflows 230, wherein said workflows are defined by developers in a YAML format. The data is received over a user interface (UI) (not shown in the Figure 2 but being one of the elements of the tool) The workflows 230 specify the underlying tasks 240 along with the relationship between them and are stored in the Master Manifest File. For greater flexibility, each task of the set of tasks 240 can be defined either within the same Master Manifest File or by supplying a Task-specific Manifest File. The Task-specific Manifest Files are easier to reuse for other use cases and tend to be smaller and easier to maintain.

The Configuration File contains variable definitions (such as volume, places where to mount those volumes ("volumeMounts"), application, arguments, environment variables, desired resources, service account, etc.) which are used by the Master and Task-specific Manifest Files for a particular use case. To change the deployment location (which Kubernetes clusters to run on) and/or which underlying components to use (e.g., whether TFJob, or any other solution is used for ML Training, whether Seldon or any other solution is used for ML Inferencing, etc.), users only need to change the Configuration File before running the tool 220. Once the use case has been developed, most changes to any parameters of the use case can be made within just the Configuration File.

The tool 220 according to an embodiment also supports the definition of Task-specific Manifest Files to convey the necessary input parameters using a "Compressed YAML Format" provided by the present embodiments. This eliminates the need for knowledge of the component-specific manifest file syntax. The tool 220 takes the Configuration File in combination with the Master Manifest File and the Task-specific Manifest File(s), unless the Task-specific Manifest File(s) are included in the Master Manifest File, and renders them into a set of deployable manifest files with the appropriate volumes and mounts, environmental variables, resources limits, etc. The tool 220 also generates the code to execute the workflow DAGs in the Kubernetes cluster(s).

Figure 4 illustrates an example of an apparatus in the form of a computer that comprises the tool according to present embodiments. The generalized structure of the apparatus will be explained in accordance with the functional blocks of the system. Several functionalities can be carried out with a single physical device, e.g. all calculation procedures can be performed in a single processor if desired. A data processing system of an apparatus according to an example of Figure 4 comprises a main processing unit 400, a memory 402, a storage device 404, an input device 406, an output device 408, and a graphics subsystem 410, which are all connected to each other via a data bus 412. A client may be understood as a client device or a software client running on an apparatus.

The main processing unit 400 is a processing unit arranged to process data within the data processing system. The main processing unit 400 may comprise or be implemented as one or more processors or processor circuitry. The memory 402, the storage device 404, the input device 406, and the output device 408 may include other components as recognized by those skilled in the art. The memory 402 and storage device 404 store data in the data processing system 400. Computer program code resides in the memory 402 for implementing, for example, machine learning process. The input device 406 inputs data into the system while the output device 408 receives data from the data processing system and forwards the data, for example to a display. While data bus 412 is shown as a single line it may be any combination of the following: a processor bus, a PCI bus, a graphical bus, an ISA bus. Accordingly, a skilled person readily recognizes that the apparatus may be any data processing device, such as a computer device, a personal computer, a server computer, a mobile phone, a smart phone, or an Internet access device, for example Internet tablet computer.

The tool according to present embodiments has the following advantages. For example, the solution provides simple pipeline composition and a uniform interface for different sub-systems and components. The tool may minimize the technology-specific knowledge requirement and may eliminate redundancy and may reduce human error. The Workflow Authoring and Realization Tool is agnostic to various current methodologies of deploying resources in a cloud network. In other words, the tool automates the implementation specific details, thereby easing the job of deploying cloud resources in a network environment.

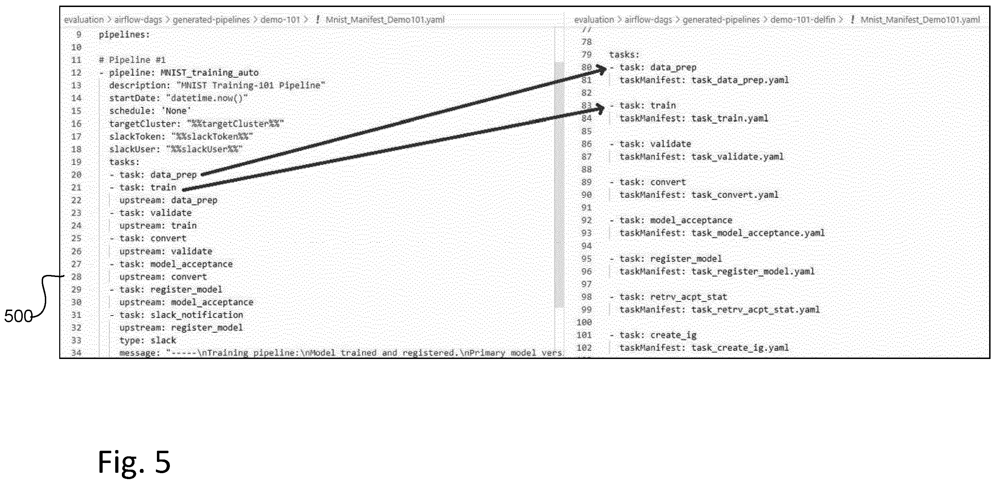

Figures 5 - 8 illustrate examples of a Master Manifest File, a Configuration File and Task-Specific Manifest File snippets for a training task.

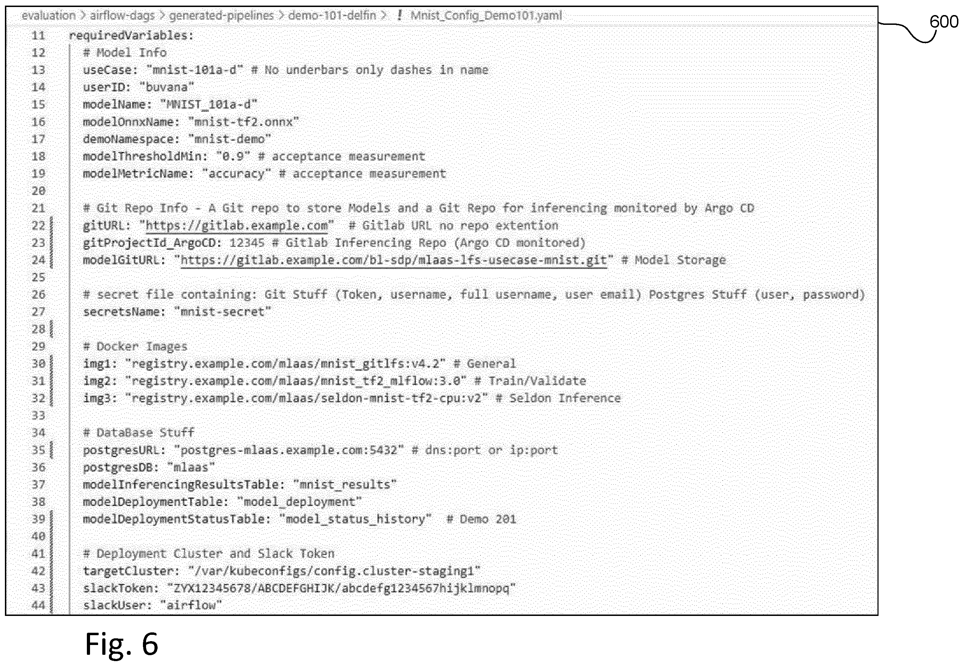

Figure 5 illustrates an example snippet of a Master Manifest File 500. The purpose of the Master Manifest File 500 is to define workflows and the tasks appearing in those workflows. The Master Manifest File 500 is used by the tool to generate a workflow DAG that is a graphical illustration of the pipeline. As shown in the example of Figure 5, the Master Manifest File 500 comprises a section "pipeline" (line #12) that defines how and when the workflow will execute, and the "tasks" subsection (line #19) defines the workflow tasks to run, along with their dependencies. In the example of Figure 5, the workflow being defined is a workflow used for training (#line 12 "MNIST_training_auto"). More than one pipeline can be defined in one Master Manifest File (i.e., Pipeline #1, Pipeline #2, Pipeline #3, etc.). It is to be noticed that some variables for the workflow are defined using "%%variable%%" format (lines #16, #17, #18). These are substituted by the tool with values from the Configuration File (see lines #42-44 in Figure 6).

The tasks that are defined for the workflow of Pipeline #1, comprise data preprocessing ("data_prep"), training, validating, converting, model acceptance, model registering, and slack notifications. The order of the tasks is also defined in the Master Manifest File since it organizes the tasks within the workflow. For example, "train" task (line #21) has an upstream dependency (line #22) on the completion of the "data_prep" task (line #20) before it can run. This means that, in the workflow, the "train" task will appear after the "data_prep" task.

Each of the tasks that are defined for the workflow may also be specified in the "tasks" section (line #79) of the Master Manifest File. In particular, these lines define either the name of the Task-specific Manifest File associated with that task (e.g., "task_data_prep.yaml" on line #81 for the "data_prep" task on line #80), or the definitions for the task itself. In either case, the associated task code is defined in either a standard YAML format or in a compressed YAML format, as previously discussed.

Figure 6 illustrates an example of a Configuration File 600. The "requiredVariables" section (line #11) of the Configuration File 600 contains the global variable definitions which include data on how to run the use case. Such data may include e.g. what system to train with, the Kubernetes clusters to deploy on, and the Docker images to use (lines #30 - #32). Lines #42 - #44 will be substituted into the example Master Manifest File snippet of Figure 5.

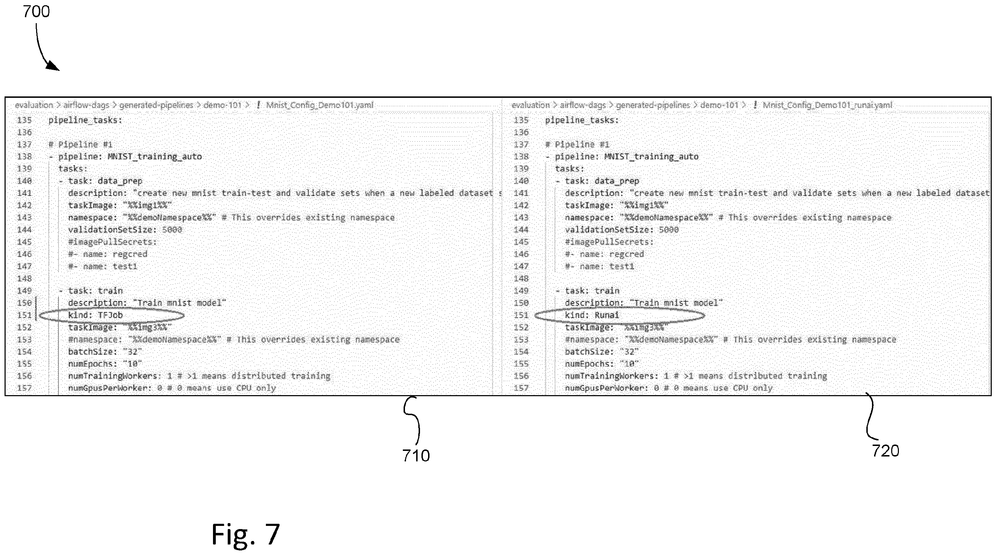

Figure 7 illustrates a "task specific" section of the Configuration File. Lines #140 - #147 define details for the data preprocessing task, and lines #149 - #157 define details for the training task. The example of Figure 7 shows how easy it is to switch from training using TFJob (line #151 in panel 710) to training using another training component, Runai (referring to run.ai) (line #151 in panel 720) with the change of a single parameter.

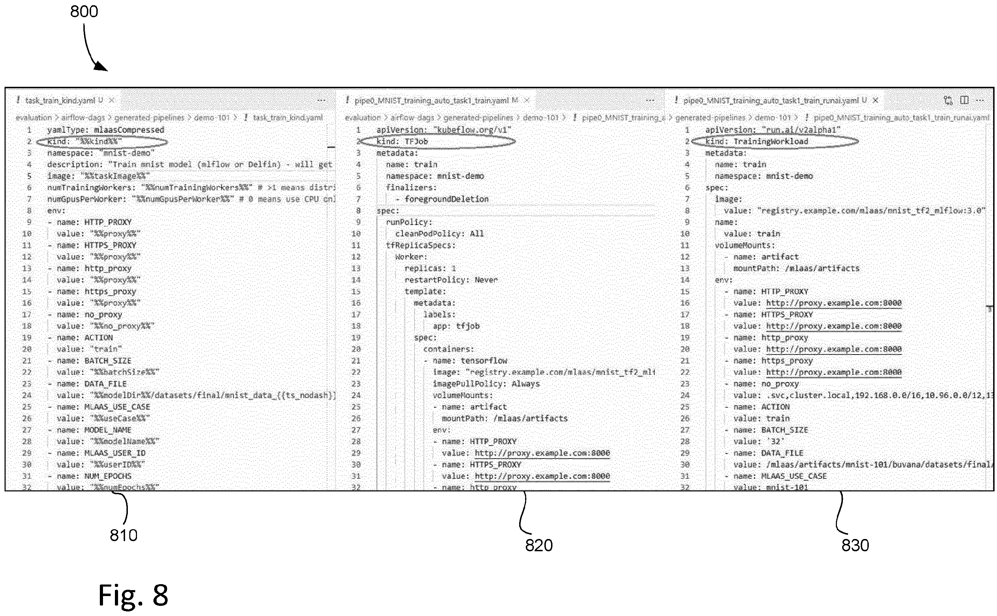

Figure 8 shows an example of a Task-Specific Manifest File for a training job. The Task-specific Manifest File is in a compressed YAML format, according to present embodiment, as shown in panel 810. For this training job, there is only a need to define the "kind" (line #2) of training job, the Docker image (line #5) to use and information about the number of workers (lines #6, #7) used for training. The remainder of the file contains several environmental variable definitions (line #9 onward) needed to execute the training code. The tool according to present embodiments will expand this compressed YAML format and use variables defined in the Configuration File along with Jinja templates to produce the deployable manifest files. Figure 8 shows the expansion for a compressed training task using either TFJob (panel 820) or another component, which in this case is TrainingWorkload (the training job type handled by run.ai)(panel 830). The user of the tool does not need know how to construct the TFJob nor the run.ai training job as the tool takes care of it for them.

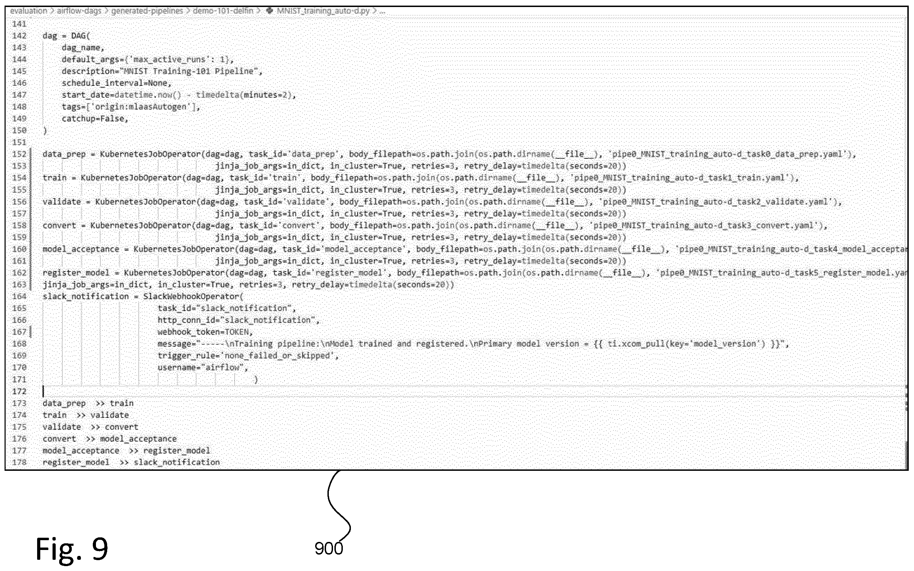

The tool, according to present embodiments, also generates the code needed to define the DAG and execute the workflow in the workflow orchestrator (e.g., Airflow). Some tasks in the workflow are run via launching Docker containers onto Kubernetes clusters while other tasks are run within the workflow orchestrator itself. Figure 9 illustrates a sample workflow training code snippet 900 (for Airflow, in this case). The code shows the different Kubernetes Job Operators created to launch the different tasks (lines #152-163) as well as the order in which to launch them (lines #173-178). All the supporting code, library imports and other definitions needed to run a complete workflow (not shown) and all the tasks are automatically created for the user.

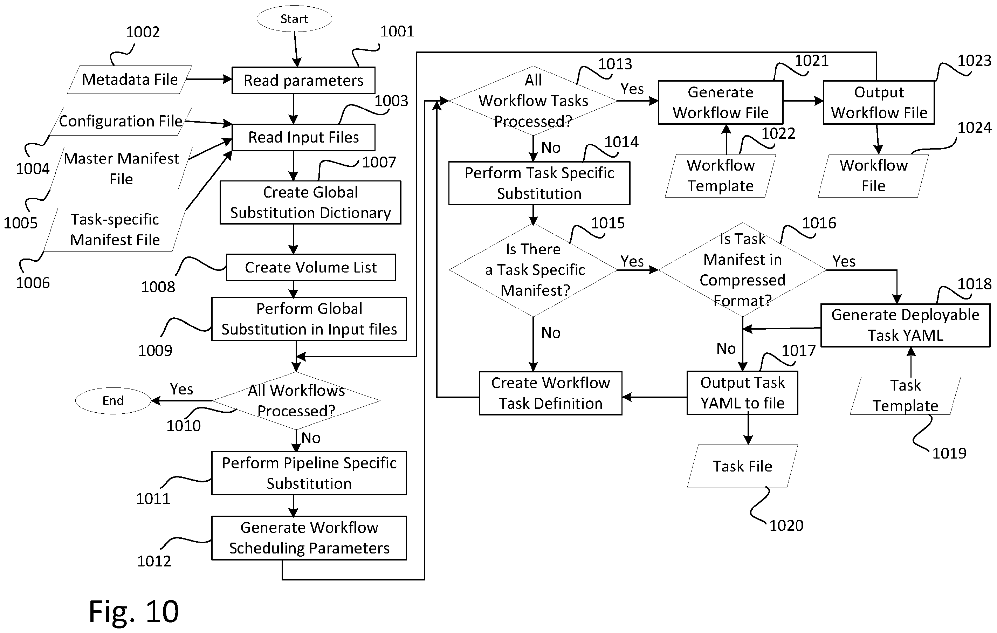

Previously, the basic operation of the tool has been discussed, and the example snippets of the code have been represented. Figure 10 illustrates operation steps of the tool according to an embodiment. It is appreciated that Figure 10 illustrates one example on how the tool operates. Therefore, the processing order can be changed from what has been shown in Figure 10. In addition, some of the steps can be ignored or replaced or combined without affecting the overall operation and expected result.

At the beginning of running the tool, the tool reads 1001 tool parameters from a tool metadata file 1002. These parameters may include e.g., workflow and task template locations, log file locations, etc. Next, the tool reads 1003 the input files, i.e., Configuration File 1004, Master Manifest File 1005, and Task-specific Manifest File 1006. By using the data in the files, the tool is configured to create a global substitution dictionary 1007 and a volume list 1008 (used for mounting filesystems defined in Task-specific Manifest Files). Based on the global substitution dictionary, the tool is able to perform global substitution 1009 in the Configuration File, Master Manifest File and Task-specific Manifest File(s). This means that variables defined with %%...%% are replaced with values taken from the Configuration File.

The tool goes through the workflows 1010 in the Master Manifest File by performing the variable substitutions 1011 and generating scheduling parameters 1012 for each workflow. In addition, the tasks 1013 for each workflow are processed by performing task-specific substitutions 1014. When there is a Task-specific Manifest 1015, it is determined whether it is in Compressed format 1016. If not, the YAML representing the task is output to a task file 1017. If the Task-specific Manifest is in Compressed format 1016, a deployable YAML file 1018 is generated based on a task template 1019, then a deployable YAML file is finally output 1017 into a task file 1020.

When all the tasks have been processed in a workflow 1013, a workflow file is generated 1021 based on a workflow template 1022, and output 1023 to a Workflow file 1024. This procedure is repeated until all the workflows 1010 defined in the Master Manifest File have been processed.

The workflow file being generated can have a code format suitable for any workflow orchestration, for example Airflow, Flyte, Prefect, Argo, Luigi, etc. The tasks of the workflow can then be executed e.g., under Kubernetes.

To highlight how flexible and adaptable the tool is, the table below shows the currently implemented sub-components (bold) and some other potential components that could be integrated in the future.

| **MLOps Functionality** | **Components (current and future)** |
|---|---|
| Data processing | **Spark**/Beam/Flink |
| Model training | Kubeflow Training **(TFJob** / TorchJob / MXJob / MPlJob), Ray-train (on Kuberay), run.ai training, polyaxon training, sagemaker-controller training, **home-grown** |
| Model inferencing | **Seldon,** KServe, Ray-serve (on Kuberay), run.ai inferencing, sagemaker-controller inferencing, **home-grown** |
| Data version control | GitLFS/DVC/LakeFS |
| Model Lineage | Apache Atlas/Datahub |
| Workflow Orchestration | **Airflow**/Argo/Prefect/Flyte/Luigi |

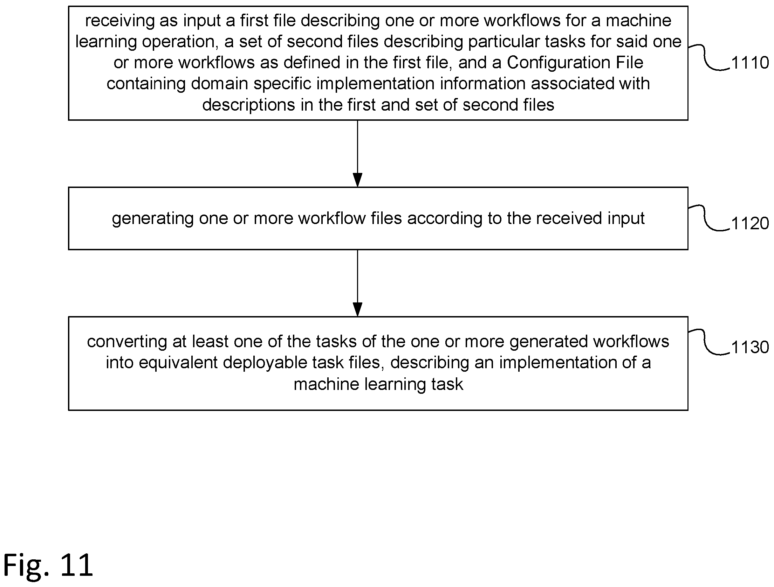

The method according to an embodiment is shown in Figure 11. The method generally comprises receiving 1110 as input a first file describing one or more workflows for a machine learning operation, a set of second files describing particular tasks for said one or more workflows as defined in the first file, and a Configuration File containing domain specific implementation information associated with descriptions in the first and set of second files; generating 1120 one or more workflow files according to the received input; converting 1130 at least one of the tasks of the one or more generated workflows into equivalent deployable task files, describing an implementation of a machine learning task. The first file may represent the Master Manifest File and the set of second files may represent a set of Task-specific Manifest Files. Each of the steps can be implemented by a respective module of a computer system.

An apparatus according to an embodiment comprises means for receiving as input a first file describing one or more workflows for a machine learning operation, a set of second files describing particular tasks for said one or more workflows as defined in the first file, and a Configuration File containing domain specific implementation information associated with descriptions in the first and set of second files; means for generating one or more workflow files according to the received input; means for converting at least one of the tasks of the one or more generated workflows into equivalent deployable task files describing an implementation of a machine learning task. The first file may represent the Master Manifest File and the set of second files may represent a set of Task-specific Manifest Files. The means comprises at least one processor, and a memory including a computer program code, wherein the processor may further comprise processor circuitry. The memory and the computer program code are configured to, with the at least one processor, cause the apparatus to perform the method of Figure 11 according to various embodiments.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of various embodiments.

In addition to the technical improvements mentioned while discussing the embodiments, the Workflow Authoring and Realization tool provides the following advantages. For example, by separating the Master Manifest File and the Configuration File, the possibility for errors is reduced because variables only need to be defined once and are then globally substituted automatically. This, in turn, reduces the amount of work required by users to review and correct the code. The reduction in code errors also leads to a smoother experience in the development of the use case, and later to the deployment since the error-related interrupts can be prevented. Also, since the Master Manifest File can be re-used in different use cases, and only the Configuration File needs to be modified, this greatly decreases the model deployment time. The tool also abstracts out the components for a given functionality and therefore the Use Case Developers do not need to know the component-specific task file formats for writing and testing their use cases, saving a lot of development time.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure, as defined in the appended claims.

## Claims

1. An apparatus comprising
- means for receiving as input a first file describing one or more workflows for a machine learning operation, a set of second files describing particular tasks for said one or more workflows as defined in the first file, and a Configuration File containing domain specific implementation information associated with descriptions in the first and set of second files;
- means for generating one or more workflow files according to the received input;
- means for converting at least one of the tasks of the one or more generated workflows into equivalent deployable task files describing an implementation of a machine learning task.

2. The apparatus according to claim 1, wherein the first file defines said one or more workflows by one or more tasks and the relationship between said tasks.

3. The apparatus according to claim 1 or 2, wherein the Configuration File contains variable definitions used by the first and the set of second files.

4. The apparatus according to claim 1 or 2 or 3, wherein the set of second files are represented in a compressed format.

5. The apparatus according to claim 4, further comprising means for generating a deployable task file from the compressed format.

6. The apparatus according to any of the claims 1 to 5, wherein the set of second files is included in the first file.

7. The apparatus according to any of the claims 1 to 6, wherein the first file is a Master Manifest File and the second file is a Task-specific Manifest File.

8. A method comprising
- receiving as input a first file describing one or more workflows for a machine learning operation, a set of second files describing particular tasks for said one or more workflows as defined in the first file, and a Configuration File containing domain specific implementation information associated with descriptions in the first and set of second files;
- generating one or more workflow files according to the received input;
- converting at least one of the tasks of the one or more generated workflows into equivalent deployable task files describing an implementation of a machine learning task.

9. The method according to claim 8, wherein the first file defines said one or more workflows by one or more tasks and the relationship between said tasks.

10. The method according to claim 8 or 9, wherein the Configuration File contains variable definitions used by the first and the set of second files.

11. The method according to claim 8 or 9 or 10, wherein the set of second files are represented in a compressed format.

12. The method according to claim 11, further comprising generating a deployable task file from the compressed format.

13. The apparatus according to any of the claims 8 to 12, wherein the set of second files is included in the first file.

14. The method according to any of the claims 8 to 13, wherein the first file is a Master Manifest File and the second file is a Task-specific Manifest File.

15. An apparatus comprising at least one processor, memory including computer program code, the memory and the computer program code configured to, with the at least one processor, cause the apparatus to perform at least the following:
- receive as input a first file describing one or more workflows for a machine learning operation, a set of second files describing particular tasks for said one or more workflows as defined in the first file, and a Configuration File containing domain specific implementation information associated with descriptions in the first and set of second files;
- generate one or more workflow files according to the received input;
- converting at least one of the tasks of the one or more generated workflows into equivalent deployable task files describing an implementation of a machine learning task.
